# EUROPEAN PATENT SPECIFICATION

(11) **EP 2 822 374 B1**
(45) Date of publication and mention of the grant of the patent: **14.09.2016**
(21) Application number: 13707628.7
(22) Date of filing: 05.03.2013
(51) Int. Cl.: A01B 79/00, E21B 7/24

(54) **SOIL SAMPLING METHOD AND DEVICE**
BODENPROBENENTNAHMEVERFAHREN UND -VORRICHTUNG
PROCÉDÉ ET DISPOSITIF D'ÉCHANTILLONNAGE DE TERRE

(30) Priority: 05.03.2012 NO 20120246
(43) Date of publication of application: 14.01.2015
(73) Proprietor: Adigo A/S, 1415 Oppegård (NO); Agri Con GmbH, 04749 Jahna (DE)
(72) Inventor: OVERSKEID, Øyvind, N-1405 Langhus (NO); SKARBØ, Peter, Magnus, N-0693 Oslo (NO)
(74) Representative: Onsagers AS
(86) International application number: PCT/EP2013/054347
(87) International publication number: WO 2013/131882

(56) References cited:
- DE-C1- 19 712 420
- FR-A1- 2 582 630
- FR-A1- 2 671 180
- FR-A1- 2 891 534
- US-B1- 6 766 865

## Description

### TECHNICAL FIELD

The present invention relates in general to agricultural technology, and more specifically to a method for sampling soil and a soil sampling device.

### BACKGROUND

In agriculture there is a general need for acquiring soil samples over a field or area.

Such soil samples may be necessary or desirable for the purpose of, i.a., obtaining information about content of minerals, nutrients, etc., of the soil at various locations. Obtaining and analyzing soil samples are also useful for the purpose of keeping control over the necessary amount of fertilizers and/or other soil additives. Such control is again valuable for increasing the overall agricultural production capacity and efficiency. In particular, the provision of soil samples is a requirement in recent farming management approaches known as "precision farming" or "precision agriculture".

Soil sampling was formerly done in a manual fashion by means of simple tools. A hollow probe with a groove was inserted into the soil by a human worker. A soil sample was manually removed from the probe, collected in a container and transported to a suitable facility for further analysis. This was of course a time-consuming and non-efficient process.

Several attempts have therefore been made to mechanize and automate the earlier manual soil sampling.

For instance, US-5 394 949 discloses a vehicle mounted mechanized soil sample collecting unit including a sampler arm pivotably affixed to a base mounted upon the vehicle. At its remote end the sampler arm pivotably carries a soil auger and soil accumulator container. An actuator is coupled to the sampler arm for swinging the arm between a lowered, soil-collecting position and a retracted container discharge position. A power unit rotates the soil auger, which is adapted to advance through the bottom of the container and into the earth as the container engages the surface of the earth upon lowering of the sampler arm. As the auger rotates the soil sample is drawn upwardly into the accumulator container by the auger flights. With the sampler arm in the retracted position the accumulator container is positioned over a funnel device into which collected soil is deposited through a bottom trap door of the accumulator container for reception in a sample container beneath the funnel outlet.

This approach has, i.a., the disadvantage that the vehicle must be brought to a standstill between each sampling location.

The latter problem has been addressed in US-6 016 713, which discloses a site-specific precision farming system for acquiring soil samples from a field of land using a vehicle remaining in the operative motion normal to a field or crop operation being performed simultaneously. The system includes a tractor, harvester, or other agricultural vehicle provided with an implement or other device appropriate to the operation being simultaneously performed; a soil sample acquiring device movable with respect to the vehicle such that the device is substantially stationary with respect to the soil while it acquires a sample; a locational identification system; a device for inserting each soil sample into an individual container and for marking the sample site locational identification thereon as alphanumeric indicia or as a barcode; and an on-board computer for control of the above processes.

US6766865 discloses a method and device for sampling soil having a frame assembly attached to a vehicle positioned on the soil surface and rotating a proximate section of a rotatable arm by an impelling device.

The above equipment involves a highly specialized or reconstructed vehicle for the sole purpose of soil sampling.

Hence, there is still a need for a soil sampling device that may conveniently be attached to a general-purpose vehicle such as a tractor or an ATV, which enables an efficient, automatic soil sampling process without the need to stop the vehicle at each sampling point.

### SUMMARY

The invention has been set forth by the appended claims.

### BRIEF DESCRIPTION OF THE DRAWINGS

Fig. 1 is a schematic side view illustrating principles of a soil sampling device attached to a vehicle,
Fig. 2 is a perspective view illustrating principles of a soil sampling device in closer detail,
Fig. 3 is a schematic side view illustrating principles of a first phase of an oscillating operation pattern of a soil sampling device,
Fig. 4 is a schematic side view illustrating principles of a second phase of an oscillating operation pattern of a soil sampling device,
Fig. 5a and 5b are perspective views illustrating principles of operation of a soil removing device,
Fig. 6a, 6b, 6c and 6d are perspective views illustrating further principles of operation of a soil removing device, and
Fig. 7 is a schematic flow chart illustrating principles of a method for sampling soil.

### DETAILED DESCRIPTION

The soil sampling method and device will now be described, by example, in closer details with reference to the drawings. It is emphasized that the method and device may correspond to each other, in such a way that the method for sampling soil may be considered as an operating method of the soil sampling device. Hence, the various features of the method and device in the present detailed description are intended to correspond to each other to the extent possible. A feature which has been disclosed with respect to the device should also be considered as being disclosed with respect to the method, and vice versa.

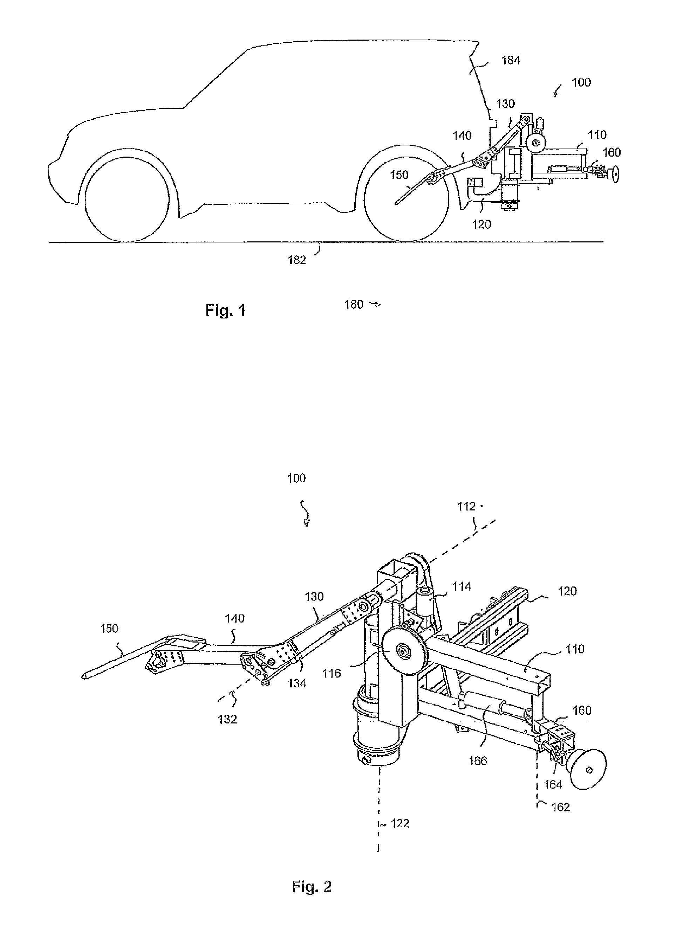

Fig. 1 is a schematic side view illustrating principles of a soil sampling device 100 attached to a vehicle 184.

The soil sampling device 100 comprises a frame assembly, which in the illustrated example includes a main frame 110 connected to a secondary frame 120. The main frame 110 and the secondary frame 120 may, as illustrated, be pivotably interconnected about a vertical axis. During operation, the main frame 110 and secondary frame 120 will usually be locked with respect to each other.

The frame assembly is adapted to be attached to a vehicle 184. In particular, the secondary frame 120 is arranged to be attached to a rear part and/or a side part of the vehicle. Alternatively, the frame could be arranged to be attached to a front part of the vehicle. The vehicle 184 may e.g. be a car, a tractor,an autonomous drone, or a trailer. The vehicle is positioned on a surface 182 of a volume of soil 180. The vehicle 184 is arranged to move, at least in a forward direction, on the soil surface.

The soil sampling device further comprises a rotatable arm, rotated by an impelling device 114 such as a motor.

The rotatable arm includes a proximate arm section 130 and a distant arm section 140. The terms "proximate" and "distant" refer to the respective arm sections' distance to a first axis 112 around which the proximate section 130 of the rotatable arm is arranged to rotate. The proximate section 130 of the rotatable arm is rotated by the impelling device 114 around the first axis 112 with respect to the frame assembly. During operation of the soil sampling device, the first axis 112 is usually arranged horizontally and transverse with respect to the vehicle's forward movement direction.

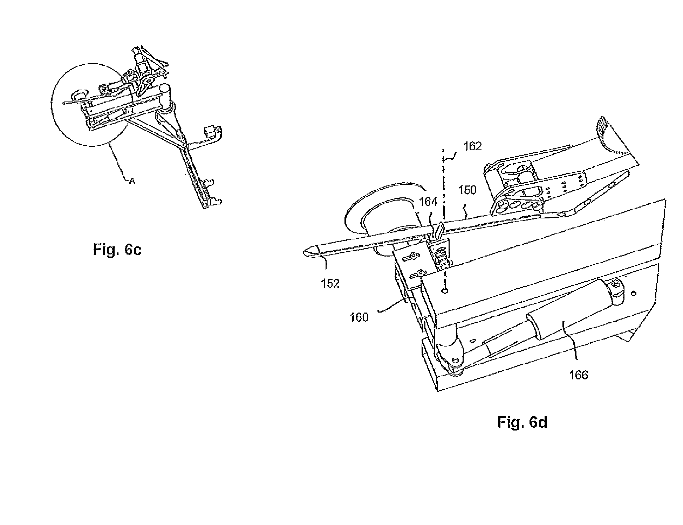

The distant section 140 of the rotatable arm includes a soil probe 150. Advantageously, the soil probe has a longitudinal groove along a part of its distal portion. The groove has been more clearly illustrated at 152 in fig. 6d.

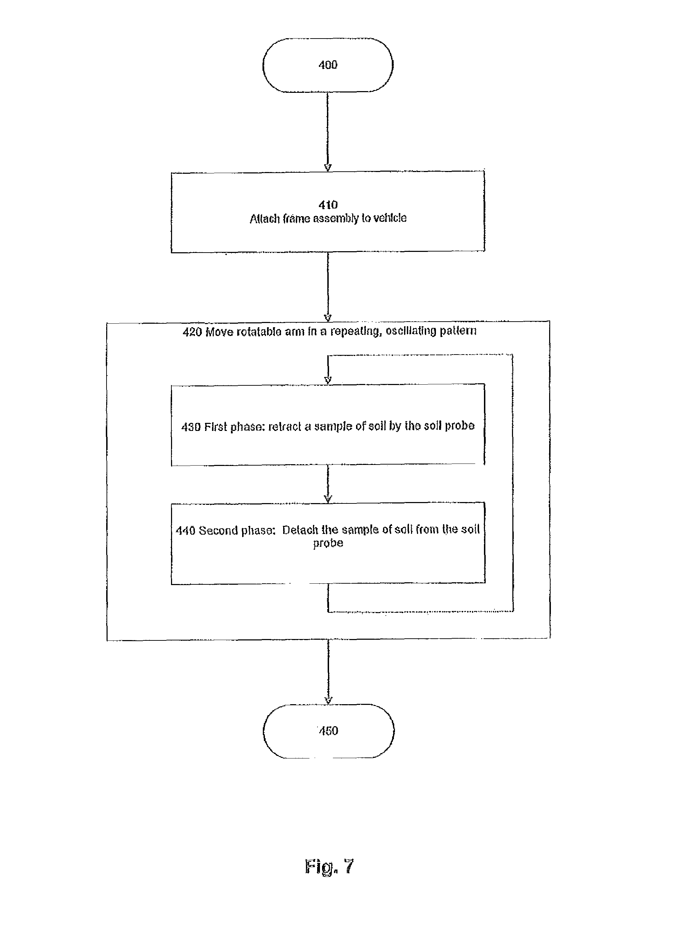

During operation of the soil sampling device, the movement of the rotatable arm describes a repeating, oscillating pattern. The oscillating pattern comprises two phases. The repeating, oscillating pattern and the phases of the pattern have also been described below with reference to figure 7, which describes a method for sampling soil.

In the first phase, the soil probe 150 is operable to penetrate a layer of the soil, including the surface of the soil, and to retract a sample of the soil.

In the second phase, the soil probe 150 is operable to engage with a soil removing device 164 in order to detach the sample of soil from the soil probe 150. The soil removing device 164 may be formed with an edge, e.g. a rounded edge, suitably adapted for scraping off soil that has gathered in the longitudinal groove 152 in the soil probe 150. The soil removing device 164 is attached to a detaching arm 160 which is pivotably connected to the main frame 110 by means of a vertical axis 162.

Although not specifically illustrated, the soil sampling device may further include a collecting device operable to collect the sample of soil detached from the soil probe 150.

Fig. 2 is a perspective view illustrating principles of a soil sampling device in closer detail.

The soil sampling device 100 comprises a frame assembly including the main frame 110 connected to the secondary frame 120, which may be lockably and pivotably interconnected about the vertical axis 122, as explained above with reference to fig. 1.

The proximate section 130 and the distant section 140 of the rotatable arm are pivotably interconnected by a second pivot axis 132.

The proximate section 130 of the rotatable arm is rotated by the impelling device 114 around a first axis 112 with respect to the frame assembly.

The impelling device 114 may e.g. be an electric motor. Alternatively, the impelling device may be a pneumatic or hydraulic motor or actuator. A transmission device 116 may suitably be arranged between the impelling device 114 and the proximate section 130 of the rotatable arm.

The impelling device 114 and the transmission device 116 may be arranged so as to cause the proximate section of the rotatable arm to oscillate in a forward and backward direction, e.g., in a pendulum-like movement. This may e.g. be achieved by operating the impelling device 114 in alternate directions. If the impelling device 114 is a DC motor, this may be realized by controlling the timing, polarity and magnitude of the input voltage or working current of the motor by means of an electronic control device which is connected to the motor.

The transmission device 116 may include, e.g., a gear wheel drive transmission or a belt drive transmission.

As an alternative, the pendulum-like movement of the proximate section of the rotatable arm may be achieved by mechanical means. In this case the impelling device 114 may e.g. be a motor which provides a continuously rotating movement, while the transmission 116 is mechanically arranged to convert the rotating movement of the motor to a pendulum-like movement of the proximate section of the rotatable arm.

The transmission 116 may, in a certain embodiment, include a disconnecting element which is arranged to disconnect the impelling device 114 from the proximate section 130 of the rotatable arm during at least a part of the first phase of the oscillating pattern, as will be explained later in this specification. Such a disconnecting element may, e.g., be a decoupling device or a cut-off clutch device. This arrangement has the effect of avoiding any conflict between the speed of the movement caused by the impelling device and the movement caused by the movement of the vehicle when the soil probe is inserted into the soil 180.

The disconnecting element may be controlled by, e.g., suitable electric/electronic circuitry or mechanical transmission elements.

As a further alternative, the impelling device may be implemented by a mechanical transmission from a wheel driven by the vehicle's movement on the ground. It is also possible to provide the impelling action of impelling device by gravitation, possibly in combination with at least one spring, in at least some phase(s) of the rotating of the proximate section of the rotatable arm.

The distant section 140 of the rotatable arm includes the soil probe 150, as explained above with reference to fig. 1.

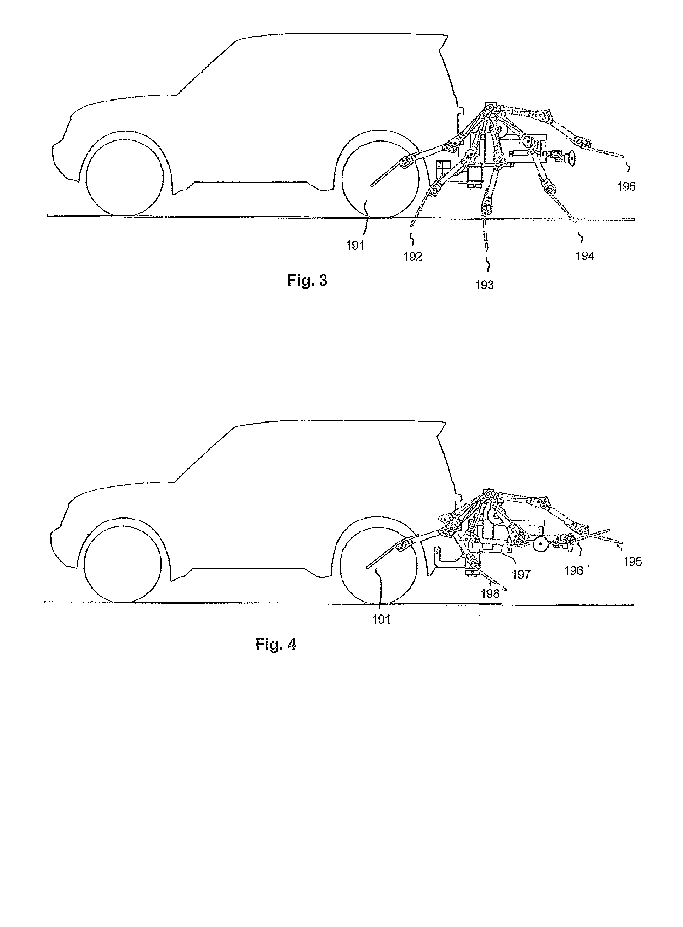

During operation of the soil sampling device, the movement of the rotatable arm describes an oscillating pattern. The oscillating pattern comprises two phases, which have been described in the following. Further explanation of the first and second phases of the oscillating pattern has been disclosed with reference to figures 3 and 4 below.

In the first phase, the soil probe is operable to penetrate a layer of the soil, including the surface of the soil, and to retract a sample of the soil.

The proximate section 130 and the distant section 140 of the rotatable arm are arranged in such a way that in the first phase of the oscillating pattern, the proximate 130 and distant 140 sections extend in an outward, substantially radial direction with respect to the first axis 112. The two sections 130 and 140 do not move relatively to one another during the first phase of the oscillating pattern.

A gas spring 134 or similar normally extended, longitudinally compressible member is arranged between the proximate 130 and distant 140 sections of the rotatable arm, in such a way that the distant section 140 of the arm is normally extended in an outwards, substantially radial direction with respect to the proximate section 130. The distant section 140 is kept in such a position during the first phase of the oscillating pattern.

In the second phase of the oscillating pattern, the soil probe 150 is operable to engage with a soil removing device 164 in order to detach the sample of soil from the soil probe 150.

The proximate section 130 and the distant section 140 of the rotatable arm are also arranged in such a way that in the second phase, the proximate section 130 extends in an outward, substantially radial direction with respect to the first axis 112, while the distant section 140 is folded with respect to the first section 130. This facilitates the soil probe 150 to engage with the soil removing device 164. The rotatable arm will then be able to return to its initial position without bumping into/interfering with the ground.

The folding takes place when the distant section 140, in particular the soil probe 150, attains contact with the soil removing device 134. This will cause the spring 134 to be compressed, resulting in a folding of the distant section 140 with respect to the proximate section 130.

After the soil is detached from the soil probe 150, the spring 134 returns to its normal, extended state, making the distant section 140 returning back to its initial position with respect to the proximate section 130.

Particular attention may advantageously be paid to the situation where the soil probe strikes a solid body, such as a stone, during its penetration of the soil. In order to avoid damage of the soil sampling device or any of its components in such a situation, a safety arrangement may be included. For instance, the link between the proximate section 130 and the distant section 140 may include a replaceable safety element such as a breakable pin. This arrangement will ensure that the pin breaks as a consequence of an overload, thus protecting the soil probe and the rotating arm.

The positioning of the soil removing device 164 between the first and second positions may be performed by a force exerting arrangement 166, which may in an embodiment be an active device which includes an electromechanical actuator such as a linear actuator interconnected between the main frame 110 and the detaching arm 160.

As an alternative, the soil removing device 164 may normally be positioned in the second position, i.e. the position of the soil removing device where it engages with the groove 152 in the soil probe 150. In this alternative configuration, the force exerting arrangement 166 may be passive and include a compressible member such as a spring. The soil removing device 164 may be arranged to be pushed away, resulting in a compression of the spring, by a force exerted by the upwards movement of the distant portion 140 of the rotating arm. This may occur at a stage at or approximately at the situation shown at 194 in figure 3. When the distant portion 140 of the rotating arm has continued to a point where it has no longer contact with the soil removing device 164, e.g. at or approximately at the situation shown at 195 in fig. 3, the spring will force the soil removing device to return to its normal position where it will be ready to engage with the groove 152 in the soil probe 150.

In each of the above configurations, the soil removing device 164 is brought in a first position away from the soil probe 150 in the first phase of the oscillating pattern, and a second position where the soil removing device 164 engages with the soil probe 150, in particular the groove 152, in the second phase of the oscillating pattern.

Fig. 3 is a schematic side view illustrating principles of a first phase of an oscillating operation pattern of a soil sampling device. It should be understood that the vehicle is intended to move forward, i.e., to the left in the drawing, during the movement of the soil sampling device's rotating arm. It should be understood that the illustrated stages 191, 192, 193, 194 and 195 are shown as instant, time-discrete examples for explanatory purposes, and that the actual movement of the soil sampler will be continuous.

In the entire first phase, i.e., at all the stages 191 through 195, the proximate 130 and distant 140 sections of the rotating arm extend in an outward, substantially radial direction with respect to the first axis 112. The spring 134 is fully extended during the first phase.

The first illustrated stage of the first phase has been illustrated at 191. At this stage, the soil probe 150 is still above the surface of the soil and is moved downwards towards the surface of the soil. Next, at 192, the tip of the soil probe 150 has just penetrated the surface of the soil. Next, at 193, the soil probe has a substantially vertical position in the soil, and soil will enter the longitudinal groove 152 in the soil probe 150 and attach to the soil probe in the groove. At 194, the soil probe is about to leave the soil surface. The sampled soil, or at least a substantial part of the soil, will remain in the groove 152 in the soil probe 150. At 195, the soil probe 150 has reached a maximum distance from the ground, i.e. the soil surface.

Fig. 4 is a schematic side view illustrating principles of a second phase of an oscillating operation pattern of a soil sampling device.

It should be understood that the vehicle may move forward, i.e., to the left in the drawing, during the movement of the soil sampling device's rotating arm. It should be understood that the illustrated stages 195, 196, 197, 198 and 191 are shown as instant, time-discrete examples for explanatory purposes, and that the actual movement of the soil sampler will be continuous.

The first illustrated stage of the second phase is identical to the last stage 195 described with reference to fig. 3 above.

The proximate section 130 of the rotating arm has now started moving in the opposite direction, i.e. downwards. At 196, the detaching arm 160 has been rotated in such a way that the detaching arm obstructs the distant section 140 of the rotatable arm. This leads to a compression of the spring 134, which results in a folding of the distant section 140 with respect to the proximate section 130. At 197, the folding movement has continued further, and the soil removing device 164 has been positioned to engage with the groove 152 in the soil probe 150, thus scraping off the soil from the groove 152 in the soil probe 150. At 197, the distant section 140, including the soil probe 150, has been disengaged from the soil removing device 164, hence, the compressed spring 134 is released and will extend to its normal, extended state. The distant section 140 will thus be brought into its extended position with respect to the proximate section 130, and the last illustrated stage of the second phase will be identical to the first stage 191 described with reference to fig. 3 above.

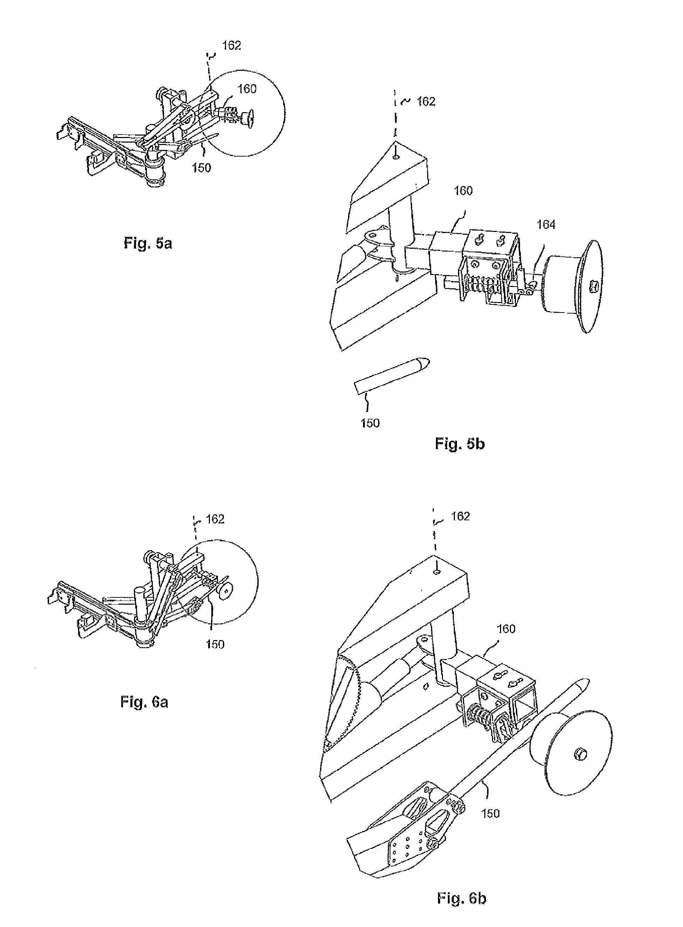

Fig. 5a and 5b are perspective views illustrating principles of operation of a soil removing device. Fig. 5a illustrates the detaching arm 160 in a non-engaging state, where the detaching arm 160 has been partly rotated around the pivoting axis 16, away from the soil probe 150. Fig. 5b illustrates details of the portion of fig. 5 that has been bordered by a circle. As appears from fig. 5b, the soil removing device 164 is positioned in such a way that it will not engage or interfere with the soil probe 150.

Fig. 6a and 6b are perspective views illustrating further principles of operation of a soil removing device. Fig. 6a illustrates the detaching arm 160 in an engaging state, where the detaching arm 160 has been rotated around the pivoting axis 162. Fig. 6b illustrates details of the portion that have been bordered by a circle on fig. 6a. As appears from fig. 6b, the soil removing device 164 is positioned in such a way that it will engage with the soil probe 150. More specifically, the soil removing device 164 will remove the soil sample from the groove in the soil probe 150.

Fig. 6c and 6d are perspective views illustrating further principles of operation of the soil removing device. Fig. 6c and 6d shows the same as fig. Fig. 6b, illustrated from a different point of view in order to show details which are hidden in fig. 6a and 6b. Hence, fig. 6c and 6d also show the detaching arm 160 in an engaging state, where the detaching arm 160 has been rotated around the pivoting axis 162. Fig. 6d illustrates details of the portion that have been bordered by a circle on fig. 6c. As appears from fig. 6d, the soil removing device 164 is positioned in such a way that it will engage with the soil probe 150. More specifically, the soil removing device 164 will remove the soil sample from the longitudinal groove 152 in the soil probe 150.

Although not illustrated in the drawings, it may be an advantage to arrange a collecting device beneath the position where the soil removing device removes the soil sample from the soil probe. Particularly, such a collecting device may include a plurality of collecting chambers or compartments, e.g. arranged in a revolving, circular assembly such as a carousel of soil sample chambers. The carousel may be rotated and controlled manually or automatically by appropriate control and operating equipment.

Fig. 7 is a schematic flow chart illustrating principles of a method for sampling soil.

The method starts at the initiating step 400.

First, in step 410, a frame assembly 110, 120 is attached to a vehicle 184 positioned on a soil surface.

Next, in the arm moving process step 420, a proximate section 130 of a rotatable arm, which also has a distant section 140 including a soil probe 150, is rotated a by an impelling device 114. During operation, the rotatable arm describes a repeating, oscillating pattern with respect to the frame assembly.

As also illustrated in fig. 7, the repeating, oscillating pattern includes two phases:
A first phase 430 wherein the soil probe is operable to retract a sample of soil, and
A second phase 440 wherein the soil probe is operable to engage with a soil removing device in order to detach the sample of soil from the soil probe.

The method may also include a collecting step (not illustrated) wherein the sample of soil detached from the soil probe is collected in a collecting device.

The proximate 130 and the distant 140 sections of the rotatable arm may advantageously be pivotably interconnected by a second pivot axis 132. In such embodiment, the first phase 430 of the oscillating pattern may include the step of arranging the proximate 130 and distant 140 sections of the rotatable arm to extend in an outward, substantially radial direction with respect to the first axis 112. Also, the second phase 440 of the oscillating pattern may include the step of arranging the proximate section 130 to extend in an outward, substantially radial direction with respect to the first axis 112, while folding the second section 140 with respect to the first section 130. This will facilitate the soil probe 150 to engage with the soil removing device 164. It will also lead to the advantageous result that the arm is able to return to its initial position without bumping into or interfering with the ground.

In an aspect of the method, the first phase 430 of the oscillating pattern includes bringing the position of the soil removing device 164 in a first position away from the soil probe 150. Further, in this aspect, the second phase 440 of the oscillating pattern includes bringing the position of the soil removing device 164 in a second position where the soil removing device 164 engages with the groove 152 in the soil probe 150.

The positioning of the soil removing device 164 between the first and second position may be performed by a force exerting arrangement 166, which may in an embodiment be an active device or a passive device as has already been explained with reference to fig. 2.

In each of the above configurations, the soil removing device 164 is brought in a first position away from the soil probe 150 in the first phase of the oscillating pattern, and a second position where the soil removing device 164 engages with the soil probe 150, in particular the groove 152, in the second phase of the oscillating pattern.

In a particular aspect of the method, during at least a part of the first phase 430 of the oscillating pattern, the impelling device may be disconnected from the proximate section 130 of the rotatable arm. This feature has the effect of avoiding any conflict between the speed of the movement caused by the impelling device and the movement caused by the movement of the vehicle when the soil probe is inserted into the soil 180.

As a result of the disclosed aspects of the disclosed soil sampling method and device, the vehicle may move during the first and second phases of the oscillating pattern, i.e. during the operation of the soil sampling device, without the need for stopping at sampling points.

The method may be terminated at the terminating step 450.

The above detailed description has been presented for exemplary purposes and is not intended to restrict the scope of the invention. Persons skilled in the art will realize that numerous variations and alterations may be made to the detailed description of embodiments within the scope of the appended claims.

## Claims

1. Method for sampling soil, comprising
attaching a frame assembly (110, 120) to a vehicle (184) positioned on a soil surface;
rotating a proximate section (130) of a rotatable arm by an impelling device (114) around a first axis (112) with respect to the frame assembly (110,120) **characterized by**:
the rotatable arm further having a distant section (140) pivotably connected with the proximate section (130), the distant section (140) including a soil probe (150), in such a way that the rotatable arm, during operation, describes a repeating, oscillating pattern with respect to the frame assembly (110, 120), the pattern including
- a first phase wherein the soil probe is operable to retract a sample of soil, and
- a second phase wherein the soil probe is operable to engage with a soil removing device in order to detach the sample of soil from the soil probe.

2. Method according to claim 1,
wherein the method further comprises collecting the sample of soil detached from the soil probe in a collecting device.

3. Method according to claim 1 or 2,
wherein the proximate (130) and the distant (140) sections of the rotatable arm are pivotably interconnected by a second pivot axis (132) and wherein the method further comprises
- in the first phase of the oscillating pattern; arranging the proximate (130) and distant (140) sections of the rotatable arm to extend in an outward, substantially radial direction with respect to the first axis (112) and
- in the second phase of the oscillating pattern; arranging the proximate section (130) to extend in an outward, substantially radial direction with respect to the first axis (112), while folding the second section (140) with respect to the first section (130), thus facilitating the soil probe (150) to engage with the soil removing device (164).

4. Method according to one of claims 1-3, further comprising
in the first phase of the oscillating pattern; bringing the position of the soil removing device (164) in a first position away from the soil probe (150), and
in the second phase of the oscillating pattern; bringing the position of the soil removing device (164) in a second position where the soil removing device (164) engages with the soil probe (150).

5. Method accoring to claim 4,
wherein a positioning of the soil removing device (164) between the first and second positions is performed by a passive force exterting arrangement (166) which includes a compressible member.

6. Method according to one of claims 1-4,
wherein the impelling device is disconnected from the proximate section (130) of the rotatable arm during at least a part of the first phase of the oscillating pattern.

7. Method according to one of the claims 1-6,
wherein the vehicle moves during the first and second phases.

8. Soil sampling device (100), comprising
a frame assembly (110, 120) adapted to be attached to a vehicle (184) positioned on a soil surface,
a rotatable arm (130, 140) driven by an impelling device (114), the rotatable arm (130, 140) having
- a proximate section (130) which is rotated by the impelling device (114) around a first axis (112) with respect to the frame assembly (110, 120), and **characterized by**
- a distant section (140) pivotably connected with the proximate section (130), the distant section (140) including a soil probe (150);
wherein the rotatable arm (130, 140), during operation, describes a repeating, oscillating pattern with respect to the frame assembly (110, 120), the pattern including
- a first phase wherein the soil probe is operable to penetrate a layer of the soil and to retract a sample of the soil, and
- a second phase wherein the soil probe is operable to engage with a soil removing device (164) in order to detach the sample of soil from the soil probe (150).

9. Soil sampling device (100) according to claim 8,
further comprising a collecting device operable to collect the sample of soil detached from the soil probe (150).

10. Soil sampling device (100) according to claim 8 or 9,
wherein the proximate (130) and the distant (140) sections of the rotatable arm are pivotably interconnected by a second pivot axis (132) and arranged in such a way that
- in the first phase, the proximate (130) and distant (140) sections extend in an outward, substantially radial direction with respect to the first axis (112); and
- in the second phase, the proximate section (130) extends in an outward, substantially radial direction with respect to the first axis (112), while the second section (140) is folded with respect to the first section (130), thus facilitating the soil probe (150) to engage with the soil removing device (164).

11. Soil sampling device according to one of the claims 8-10,
further comprising an arrangement (166) to bring the position of the soil removing device (164) in
a first position away from the soil probe (150) in the first phase of the oscillating pattern, and
a second position where the soil removing device (164) engages with the soil probe (150) in the second phase of the oscillating pattern.

12. Soil sampling device accoring to claim 11,
wherein said arrangement (166) to bring the position of the soil removing device (164) in said first and second positions is passive and includes a compressible member.

13. Soil sampling device according to one of the claims 8-11,
further comprising a disconnecting element disconnecting the impelling device (114) from the proximate section (130) of the rotatable arm during at least a part of the first phase of the oscillating pattern.

14. Soil sampling device according to one of the claims 8-13,
wherein, during operation, the vehicle is adapted to move during the first and second phases.

## Patentansprüche

1. Verfahren zu Bodenprobenentnahme, Folgendes umfassend:
Befestigen einer Gestellbaugruppe (110, 120) an einem Fahrzeug (184), das auf einer Bodenoberfläche positioniert ist;
Drehen eines proximalen Abschnitts (130) eines drehbeweglichen Arms mittels einer Antriebsvorrichtung (114) um eine erste Achse (112) in Bezug auf die Gestellbaugruppe (110, 120),
**dadurch gekennzeichnet, dass**:
der drehbewegliche Arm darüber hinaus einen distalen Abschnitt (140) hat, der schwenkbeweglich mit dem proximalen Abschnitt (130), derart verbunden ist, dass der drehbewegliche Arm während des Betriebs ein sich wiederholendes Schwingungsmuster in Bezug auf die Gestellbaugruppe (110, 120) beschreibt, wobei der distale Abschnitt (140) eine Bodensonde (150) umfasst, wobei das Muster umfasst:
- eine erste Phase, in der die Bodensonde betätigt werden kann, um eine Bodenprobe einzuholen, und
- eine zweite Phase, in der die Bodensonde zum Eingriff mit einer Bodenentfernungsvorrichtung betätigt werden kann, um die Bodenprobe von der Bodensonde zu lösen.

2. Verfahren nach Anspruch 1,
wobei das Verfahren darüber hinaus umfasst, die von der Bodensonde gelöste Bodenprobe in einer Sammelvorrichtung aufzufangen.

3. Verfahren nach Anspruch 1 oder 2,
wobei der proximale (130) und der distale (140) Abschnitt des drehbeweglichen Arms mittels einer zweiten Schwenkachse (132) miteinander verbunden sind, und wobei das Verfahren darüber hinaus umfasst:
- in der ersten Phase des Schwingungsmusters; Anordnen des proximalen (130) und des distalen (140) Abschnitts des drehbeweglichen Arms so, dass sie sich in einer nach außen gerichteten, im Wesentlichen radialen Richtung in Bezug auf die erste Achse (112) erstrecken, und
- in der zweiten Phase des Schwingungsmusters; Anordnen des proximalen Abschnitts (130) so, dass er sich in einer nach außen gerichteten, im Wesentlichen radialen Richtung in Bezug auf die erste Achse (112) erstreckt, während der zweite Abschnitt (140) in Bezug auf den ersten Abschnitt (130) eingeklappt wird, wodurch der Eingriff der Bodensonde (150) mit der Bodenentfernungsvorrichtung (164) erleichtert wird.

4. Verfahren nach einem der Ansprüche 1 bis 3, darüber hinaus umfassend:
in der ersten Phase des Schwingungsmusters; die Position der Bodenentfernungsvorrichtung (164) in eine erste Position weg von der Bodensonde (150) zu bringen, und in der zweiten Phase des Schwingungsmusters; die Position der Bodenabförderungsvorrichtung (164) in eine zweite Position zu bringen, in der die Bodenentfernungsvorrichtung (164) einen Eingriff mit der Bodensonde (150) eingeht.

5. Verfahren nach Anspruch 4,
wobei eine Positionierung der Bodenentfernungsvorrichtung (164) zwischen der ersten und zweiten Position durch eine Passivkraftausübungsvorrichtung (166) erfolgt, die ein komprimierbares Teil enthält.

6. Verfahren nach einem der Ansprüche 1 bis 4,
wobei die Antriebsvorrichtung vom proximalen Abschnitt (130) des drehbeweglichen Arms während zumindest eines Teils der ersten Phase des Schwingungsmusters getrennt wird.

7. Verfahren nach einem der Ansprüche 1 bis 6,
wobei sich das Fahrzeug während der ersten und zweiten Phase bewegt.

8. Bodenprobenentnahmevorrichtung (100), Folgendes aufweisend:
eine Gestellbaugruppe (110, 120), die dazu angepasst ist, an einem Fahrzeug (184) befestigt zu werden, das auf einer Bodenoberfläche positioniert ist;
einen drehbeweglichen Arm (130, 140), der mittels einer Antriebsvorrichtung (114) angetrieben wird, wobei der drehbewegliche Arm (130, 140) Folgendes hat:
- einen proximalen Abschnitt (130), der mittels der Antriebsvorrichtung (114) um eine erste Achse (112) in Bezug auf die Gestellbaugruppe (110, 120) gedreht wird, und
**gekennzeichnet durch**
- einen distalen Abschnitt (140), der schwenkbeweglich mit dem proximalen Abschnitt (130) verbunden ist, wobei der distale Abschnitt (140) eine Bodensonde (150) aufweist;
wobei der drehbewegliche Arm (130, 140) während des Betriebs ein sich wiederholendes Schwingungsmuster in Bezug auf die Gestellbaugruppe (110, 120) beschreibt, wobei das Muster umfasst:
- eine erste Phase, in der die Bodensonde betätigt werden kann, um eine Schicht des Bodens zu durchdringen und eine Probe des Bodens einzuholen, und
- eine zweite Phase, in der die Bodensonde zum Eingriff mit einer Bodenentfernungsvorrichtung (164) betätigt werden kann, um die Bodenprobe von der Bodensonde (150) zu lösen.

9. Bodenprobenentnahmevorrichtung (100) nach Anspruch 8,
darüber hinaus eine Sammelvorrichtung aufweisend, die betätigt werden kann, um die von der Bodensonde (150) gelöste Bodenprobe aufzufangen.

10. Bodenprobenentnahmevorrichtung (100) nach Anspruch 8 oder 9,
wobei der proximale (130) und der distale (140) Abschnitt des drehbeweglichen Arms mittels einer zweiten Schwenkachse (132) miteinander verbunden und so angeordnet sind, dass:
- in der ersten Phase sich der proximale (130) und der distale (140) Abschnitt in einer nach außen gerichteten, im Wesentlichen radialen Richtung in Bezug auf die erste Achse (112) erstrecken, und
- in der zweiten Phase sich der proximale Abschnitt (130) in einer nach außen gerichteten, im Wesentlichen radialen Richtung in Bezug auf die erste Achse (112) erstreckt, während der zweite Abschnitt (140) in Bezug auf den ersten Abschnitt (130) eingeklappt ist, wodurch der Eingriff der Bodensonde (150) mit der Bodenentfernungsvorrichtung (164) erleichtert ist.

11. Bodenprobenentnahmevorrichtung (100) nach einem der Ansprüche 8 bis 10, darüber hinaus eine Anordnung (166) aufweisend, um die Position der Bodenentfernungsvorrichtung (164) in
eine erste Position weg von der Bodensonde (150) in der ersten Phase des Schwingungsmusters, und
eine zweite Position zu bringen, in der die Bodenentfernungsvorrichtung (164) mit der Bodensonde (150) in der zweiten Phase des Schwingungsmusters einen Eingriff eingeht.

12. Bodenprobenentnahmevorrichtung nach Anspruch 11,
wobei die Anordnung (166), um die Bodenentfernungsvorrichtung (164) in die erste und zweite Position zu bringen, passiv ist und ein komprimierbares Teil aufweist.

13. Bodenprobenentnahmevorrichtung nach einem der Ansprüche 8 bis 11, darüber hinaus ein Trennelement aufweisend, das die Antriebsvorrichtung (114) während zumindest eines Teils der ersten Phase des Schwingungsmusters vom proximalen Abschnitt (130) des drehbeweglichen Arms trennt.

14. Bodenprobenentnahmevorrichtung nach einem der Ansprüche 8 bis 13,
wobei das Fahrzeug während des Betriebs dazu angepasst ist, sich während der ersten und zweiten Phase zu bewegen.

## Revendications

1. Procédé pour échantillonner de la terre comprenant les étapes consistant à
fixer un ensemble de bâti (110, 120) à un véhicule (184) positionné sur une surface de terre ;
faire tourner une section proximale (130) d'un bras rotatif par un dispositif d'entraînement (114) autour d'un premier axe (112) par rapport à l'ensemble de bâti (110, 120),
**caractérisé en ce que** :
le bras rotatif a en outre une section distale (140) raccordée de manière pivotante à la section proximale (130), la section distale (140) comprenant une sonde de terre (150) de sorte que le bras rotatif, pendant le fonctionnement, décrit un motif oscillant répétitif par rapport à l'ensemble de bâti (110, 120), le motif comprenant :
une première phase dans laquelle la sonde de terre peut fonctionner pour rétracter un échantillon de terre, et
une seconde phase dans laquelle la sonde de terre peut fonctionner pour se mettre en prise avec un dispositif de retrait de terre afin de détacher l'échantillon de terre de la sonde de terre.

2. Procédé selon la revendication 1,
dans lequel le procédé comprend en outre l'étape consistant à collecter l'échantillon de terre détaché de la sonde de terre dans un dispositif de collecte.

3. Procédé selon la revendication 1 ou 2,
dans lequel les sections proximale (130) et distale (140) du bras rotatif sont interconnectées de manière pivotante par un second axe de pivot (132) et dans lequel le procédé comprend en outre :
dans la première phase du motif oscillant ; l'étape consistant à agencer les sections proximale (130) et distale (140) du bras rotatif pour s'étendre dans une direction vers l'extérieur sensiblement radiale par rapport au premier axe (112), et
dans la seconde phase du motif oscillant ; l'étape consistant à agencer la section proximale (130) pour s'étendre dans une direction vers l'extérieur sensiblement radiale par rapport au premier axe (112), tout en pliant la seconde section (140) par rapport à la première section (130), facilitant ainsi la mise en prise de la sonde de terre (150) avec le dispositif de retrait de terre (164).

4. Procédé selon l'une des revendications 1 à 3, comprenant en outre :
dans la première phase du motif oscillant ; l'étape consistant à amener la position du dispositif de retrait de terre (164) dans une première position à distance de la sonde de terre (150), et
dans la seconde phase du motif oscillant ; l'étape consistant à amener la position du dispositif de retrait de terre (164) dans une seconde position dans laquelle le dispositif de retrait de terre (164) se met en prise avec la sonde de terre (150).

5. Procédé selon la revendication 4,
dans lequel un positionnement du dispositif de retrait de terre (164) entre les première et seconde positions est réalisé par un agencement exerçant une force passive (166) qui comprend un élément compressible.

6. Procédé selon l'une des revendications 1 à 4, dans lequel le dispositif d'entraînement est déconnecté de la section proximale (130) du bras rotatif pendant au moins une partie de la première phase du motif oscillant.

7. Procédé selon l'une des revendications 1 à 6, dans lequel le véhicule se déplace pendant les première et seconde phases.

8. Dispositif d'échantillonnage de terre (100) comprenant :
un ensemble de bâti (110, 120) adapté pour être fixé à un véhicule (184) positionné sur une surface de terre,
un bras rotatif (130, 140) entraîné par un dispositif d'entraînement (114), le bras rotatif (130, 140) ayant
une section proximale (130) qui est entraînée en rotation par le dispositif d'entraînement (114) autour d'un premier axe (112) par rapport à l'ensemble de bâti (110, 120), et
**caractérisé par**
une section distale (140) raccordée de manière pivotante à la section proximale (130), la section distale (140) comprenant une sonde de terre (150) ;
dans lequel le bras rotatif (130, 140), pendant le fonctionnement, décrit un motif oscillant répétitif par rapport à l'ensemble de bâti (110, 120), le motif comprenant
une première phase dans laquelle la sonde de terre peut fonctionner pour pénétrer dans une couche de terre et rétracter un échantillon de terre, et
une seconde phase dans laquelle la sonde de terre peut fonctionner pour se mettre en prise avec un dispositif de retrait de terre (164) afin de détacher l'échantillon de terre de la sonde de terre (150).

9. Dispositif d'échantillonnage de terre (100) selon la revendication 8,
comprenant en outre un dispositif de collecte pouvant fonctionner pour collecter l'échantillon de terre détaché de la sonde de terre (150).

10. Dispositif d'échantillonnage de terre (100) selon la revendication 8 ou 9,
dans lequel les sections proximale (130) et distale (140) du bras rotatif sont interconnectées de manière pivotante par un second axe de pivot (132) et agencées de sorte que :
dans la première phase, les sections proximale (130) et distale (140) s'étendent dans une direction vers l'extérieur sensiblement radiale par rapport au premier axe (112) ; et
dans la seconde phase, la section proximale (130) s'étend dans une direction vers l'extérieur sensiblement radiale par rapport au premier axe (112), alors que la seconde section (140) est pliée par rapport à la première section (130), facilitant ainsi la mise en prise de la sonde de terre (150) avec le dispositif de retrait de terre (164).

11. Dispositif d'échantillonnage de terre selon l'une des revendications 8 à 10,
comprenant en outre un agencement (166) pour amener la position du dispositif de retrait de terre (164) dans
une première position à distance de la sonde de terre (150) dans la première phase de la configuration oscillante, et
une seconde position dans laquelle le dispositif de retrait de terre (164) se met en prise avec la sonde de terre (150) dans la seconde phase de la configuration oscillante.

12. Dispositif d'échantillonnage de terre selon la revendication 11,
dans lequel ledit agencement (166) pour amener la position du dispositif de retrait de terre (164) dans lesdites première et seconde positions est passif et comprend un élément compressible.

13. Dispositif d'échantillonnage de terre selon l'une des revendications 8 à 11,
comprenant en outre un élément de déconnexion déconnectant le dispositif d'entraînement (114) de la section proximale (130) du bras rotatif pendant au moins une partie de la première phase de la configuration oscillante.

14. Dispositif d'échantillonnage de terre selon l'une des revendications 8 à 13,
dans lequel, pendant le fonctionnement, le véhicule est adapté pour se déplacer pendant les première et seconde phases.
